# EUROPÄISCHE PATENTSCHRIFT

(11) **EP 1 129 004 B1**
(45) Veröffentlichungstag und Bekanntmachung des Hinweises auf die Patenterteilung: **02.05.2002**
(21) Anmeldenummer: 99952620.5
(22) Anmeldetag: 20.10.1999
(51) Int. Cl.: B62D 7/15

(54) **FAHRZEUG MIT HINTERRADZUSATZLENKUNG**
VEHICLE WITH AUXILIARY REAR WHEEL STEERING MECHANISM
VEHICULE A DIRECTION ADDITIONNELLE POUR LES ROUES ARRIERE

(30) Priorität: 12.11.1998 DE 19852155
(43) Veröffentlichungstag der Anmeldung: 05.09.2001
(73) Patentinhaber: DaimlerChrysler AG, 70567 Stuttgart (DE)
(72) Erfinder: HORWATH, Jochen, D-72669 Unterensingen (DE); KAUFMANN, Ralf, D-74731 Walldürn (DE); KOCHENDÖRFER, Claus, D-71394 Kernen (DE); PFLUG, Hans-Christian, D-73630 Remshalden (DE)
(86) Internationale Anmeldenummer: EP9907976
(87) Internationale Veröffentlichungsnummer: WO0029274

(56) Entgegenhaltungen:
- DE-C- 4 413 413
- PATENT ABSTRACTS OF JAPAN vol. 017, no. 682 (M-1528), 14. Dezember 1993 (1993-12-14) -& JP 05 229449 A (ATSUGI UNISIA CORP), 7. September 1993 (1993-09-07)
- PATENT ABSTRACTS OF JAPAN vol. 014, no. 575 (M-1062), 20. Dezember 1990 (1990-12-20) -& JP 02 249766 A (MAZDA MOTOR CORP), 5. Oktober 1990 (1990-10-05)

## Beschreibung

Die Erfindung betrifft ein nicht spurgebundenes Fahrzeug mit willkürlich lenkbaren Vorderrrädern und selbsttätig arbeitender bzw. auf selbständigen Betrieb umschaltbarer Hinterradzusatzlenkung, die den Lenkwinkel der Hinterräder in Abhängigkeit vom Lenkwinkel der Vorderräder sowie von weiteren Parametern, wie z.B. die Fahrzeuggeschwindigkeit oder die vom Fahrzeug zurückgelegte Wegstrecke, steuert bzw. regelt, wobei die Hinterradzusatzlenkung parameterabhängig zwischen einem Anfahrbetrieb und einem Normalbetrieb umschaltet.

Üblicherweise besitzen normale Straßenfahrzeuge mit willkürlich lenkbaren Vorderrädern und unlenkbaren Hinterrädern einen im Vergleich zur Fahrzeuglänge kurzen Radstand. Hier kann beispielsweise auf große Omnibusse verwiesen werden. Durch diese Bauart werden Lenkmanöver beim Durchfahren enger und kurvenreicher Wege, etwa in alten Städten, wesentlich erleichtert. Andererseits ist ein langer Radstand im Hinblick auf eine gute Richtungsstabilität des Fahrzeuges bei höheren Geschwindigkeiten vorteilhaft. Außerdem können die Radkästen bei einem langen Radstand weit nach vorne und hinten verlegt werden, wodurch sich der Innenraum besser ausnutzen läßt und zusätzlich die Achslastausnutzung verbessert werden kann.

Dementsprechend muß bei der Konzeption eines Fahrzeuges ein optimaler Kompromiß zwischen leichter Manövrierbarkeit bei Lenkmanövern auf engem Raum und guter Richtungsstabilität bei schneller Fahrt gesucht werden.

Bei Fahrzeugen der eingangs genannten Art kann auch bei (sehr) langem Radstand und entsprechend guter Richtungsstabilität bei schneller Fahrt eine einfache Handhabung bei engen und kurvenreichen Wegen erreicht werden. Aufgrund der zusätzlichen Hinterradlenkung werden die Hinterräder gegensinnig zu einem Lenkeinschlag der Vorderräder betätigt und somit bewegt sich der Fahrzeugaufbau relativ zum Untergrund bei Kurvenfahrt so, als hätte das Fahrzeug einen deutlich kürzeren Radstand und unlenkbare Hinterräder. Dieses Konzept ist beispielsweise aus der DE 39 29 994 A1 bekannt.

Wenn ein derartiges Fahrzeug hinter der Hinterachse einen relativ langen Hecküberhang besitzt, kann der Fall eintreten, daß dieses Fahrzeug in eine Position dicht neben einem sich parallel zur Fahrzeuglängsrichtung erstreckenden feststehenden Hindernis gelangt. Ausgehend von dieser Position ist es für den Fahrer schwierig, das Fahrzeug bei der Weiterfahrt von dem Hindernis zu entfernen. Denn die Vorderräder dürfen dann nur geringfügig aus ihrer Geradeausstellung in die von der Wand wegweisende Richtung ausgelenkt werden, da anderenfalls das Heck aufgrund der entgegengesetzt auslenkenden Hinterräder übermäßig in Richtung des Hindernisses ausschwenken und mit diesem kollidieren würde. Diese Problematik tritt beispielsweise dann auf, wenn das Fahrzeug zum Be- oder Entladen dicht neben einer fahrzeugparallelen Laderampe abgestellt wird und nach dem Ladevorgang wieder davon fortbewegt werden soll. Das selbe Problem ergibt sich beispielsweise bei einem Omnibus, der in eine Haltestelle einfährt und dort parallel und mit geringem Abstand zu einer Bordsteinkante anhält. Wenn der Fahrer die Vorderräder dann stark in eine von der Bordsteinkante wegweisende Richtung einschlägt, würden beim nachfolgenden Start die Hinterräder die Bordsteinkante überrollen. Im Hinblick auf den Komfort und auf die Sicherheit der Fahrgäste sowie der Passanten wäre dies ein unakzeptables Fahrverhalten.

Dieses Problem kann gemäß der DE 41 40 124 C1 gelöst werden, indem bei Fahrzeugen mit langem Hecküberhang eine Hinterradzusatzlenkung vorgesehen wird, die derart steuerbar ist, daß bei Kurvenfahrt ein Punkt am Fahrzeugheck der Bahnkurve eines analogen Punktes am Fahrzeugbug folgt. Dies hat zur Folge, daß die Hinterräder beim Verlassen einer hindernisnahen oder wandnahen Position des Fahrzeuges zunächst gleichsinnig zu den Vorderrädern, deren Lenkung durch den Fahrer betätigt wird, ausgelenkt werden. Damit kann der Fahrer die Vorderräder praktisch beliebig in eine von dem Hindernis bzw. der Wand wegweisende Richtung steuern.

Diese Problematik wird auch in der DE 35 06 048 C2 behandelt. Dort wird eine Lenkbetriebsweise für eine Allradlenkung gezeigt, bei der ein übermäßiges Ausscheren des Fahrzeughecks zur Kurvenaußenseite hin bei starkem Einschlag der Vorderräder und niedriger Fahrgeschwindigkeit verhindert wird, um es dem Fahrer beispielsweise zu erleichtern, unmittelbar am Ausgang einer engen Durchfahrt abzubiegen, ohne daß die Gefahr einer Kollision zwischen Fahrzeugheck und Begrenzungen der Durchfahrt besteht.

In diesem Zusammenhang ist außerdem aus der gattungsgemässen DE 44 13 413 C1 bei Fahrzeugen mit im Vergleich zur Fahrzeuglänge langem Radstand und lenkbaren Hinterrädern vorgesehen, daß die Hinterradlenkung automatisch oder manuell auf eine besondere Betriebsweise einstellbar ist, bei der während einer Fahrphase nach einem Halt oder einer Unterschreitung einer geringen Mindestgeschwindigkeit des Fahrzeuges bei willkürlicher Auslenkung der Vorderräder aus einer Geradeausstellung oder einer dazu benachbarten Stellung das jeweils kurvenaußenseitige Hinterrad zunächst auf einer Spur läuft, die die beim Halt bzw. bei Unterschreitung der Mindestgeschwindigkeit vorliegenden Radaufstandsbereiche von Vorderrad und Hinterrad auf der kurvenäußeren Fahrzeugseite etwa geradlinig verbindet oder kurveninnenseitig einer die genannten Radaufstandsbereiche verbindenden geraden Linie verläuft. Durch diese Maßnahme wird gewährleistet, daß einerseits beim Verlassen einer Haltestelle in einer von einer Bordsteinkante wegweisenden Richtung die Hinterräder jedenfalls dann nicht über die Bordsteinkante laufen, wenn der Fahrer mit seinen Lenkmanövern ein Überfahren der Bordsteinkante mit den Vorderrädern vermieden hat, wie es üblich und leicht möglich ist. Andererseits wird auch während dieser besonderen Betriebsweise noch ein kinematisches Verhalten wie bei einem Fahrzeug mit kürzerem Radstand und unlenkbaren Hinterrädern erreicht.

Aus der DE 43 41 636 A1 ist außerdem ein Fahrzeug bekannt, bei dem die Verstellung der Hinterräder beim Anfahren und Herauslenken aus der Geradeausfahrstellung zeitlich verzögert der Lenkbewegung der Vorderräder folgt. Durch eine derartige Lenkcharakteristik soll vermieden werden, daß ein kurvenäußerer Eckpunkt des Fahrzeughecks beim Anfahren ein seitlich des Fahrzeuges angeordnetes Hindernis, z.B. einen Bordstein, überfahrt.

Die vorliegende Erfindung beschäftigt sich mit dem Problem, die Manövrierfähigkeit eines Fahrzeuges der eingangs genannten Art hinsichtlich einer reduzierten Heckausschwenkung während des Anfahrbetriebes zu verbessern.

Dieses Problem wird erfindungsgemäß dadurch gelöst, daß der Lenkwinkel der Hinterräder beim Anfahrbetrieb derart gesteuert oder geregelt wird, daß die Hinterräder nicht über einen beim letzten Halt des Fahrzeuges eingenommenen Lenkwinkel, der im folgenden als "Haltelenkwinkel" bezeichnet wird, hinaus verstellt werden.

Die Erfindung beruht auf dem allgemeinen Gedanken, daß diejenigen Hinterräderlenkwinkel, mit denen das Fahrzeug eine Haltstelle durchfahren kann, für die Fahrgäste, die Passanten und für das Fahrzeug unkritisch ist. Dementsprechend ist ein bei diesen Hinterräderlenkwinkeln erfolgendes Ausschwenken des Fahrzeughecks ungefährlich, auch wenn das Fahrzeug dabei seine Fahrt mit einem Halt unterbricht und mit einem Anfahrvorgang fortsetzt. Mit anderen Worten, fährt das Fahrzeug auf einer Kurvenspur, d.h. mit mehr oder weniger stark eingeschlagenen Rädern, in eine Haltestelle ein, so kann davon ausgegangen werden, daß mit den dabei vorliegenden Lenkwinkeln die gesamte Kurve befahren werden kann und daß dabei das Heck auf dem Folgekurs der Front ebenfalls diese Haltestellenkurve durchfahren kann. Dabei ist es völlig unabhängig, ob die Haltestelle in Vorwärtsfahrt oder in Rückwärtsfahrt wieder verlassen wird.

Durch die erfindungsgemäße Lenkungssteuerung wird bewirkt, daß die Hinterräder im Anfahrbetrieb bei Lenkwinkeln bis zum Haltelenkwinkel die gleiche Abhängigkeit von dem Lenkwinkel der Vorderräder aufweisen wie im Normalbetrieb. Dabei simuliert der Haltelenkwinkel für die Hinterräder einen Lenkungsanschlag, über den die Hinterräder bei weitergehendem Lenkeinschlag an den Vorderrädern nicht hinausgehen können. Ab Vorderräderlenkwinkeln, die im Normalbetrieb einen über den Haltelenkwinkel hinausgehende Hinterräderlenkwinkel erzeugen würden, weisen die Hinterräder konstant den Haltelenkwinkel auf.

In einem ersten Extremfall, bei dem die Haltestelle mit maximalem Lenkwinkel angefahren wird, ist demnach der Anfahrbetrieb identisch mit dem Normalbetrieb, da dann der Haltelenkwinkel mit dem im Normalbetrieb maximal einstellbaren Hinterräderlenkwinkel übereinstimmt. In einem anderen Extremfall, wenn das Fahrzeug im wesentlichen tangential eine Haltestelle anfährt, weist der Haltelenkwinkel einen minimalen Wert, insbesondere den Wert Null auf, so daß der Anfahrbetrieb dann im wesentlichen dem Betrieb eines Fahrzeuges ohne Hinterradlenkung entspricht.

Das erfindungsgemäße Lenkungssystem kommt dabei ohne aufwendige Kursberechnungen für das Heck des Fahrzeuges aus, so daß es mit relativ geringem Aufwand realisierbar ist. Dennoch kann das Heckausschwenkverhalten des Fahrzeugs reduziert und dessen Manövrierfähigkeit verbessert werden.

Bei einer bevorzugten Ausführungsform des erfindungsgemäßen Fahrzeuges kann die Hinterradzusatzlenkung einen Halt des Fahrzeuges durch das Unterschreiten einer vorbestimmten Fahrzeuggrenzgeschwindigkeit erkennen. Dies ist beispielsweise dann von besonderer Bedeutung, wenn das Fahrzeug sehr dicht an einer Wand vorbeifahren muß, was üblicherweise mit einer relativ niedrigen Geschwindigkeit erfolgen sollte. Würde dann das System nicht auf Anfahrbetrieb umschalten, würde ein starker, von der Wand wegführender Lenkeinschlag unweigerlich zu einer Kollision zwischen Wand und Fahrzeugheck führen.

Vorzugsweise schaltet die Hinterradzusatzlenkung vom Anfahrbetrieb in den Normalbetrieb um, wenn die Hinterräder einen Lenkwinkel einnehmen, der kleiner als der Haltelenkwinkel ist. Als zusätzlich zu erfüllender Parameter kann beispielsweise gefordert werden, daß die Hinterräder etwa den Ort erreichen, an dem beim letzten Halt die Vorderräder standen. Alternativ oder kumulativ kann außerdem gefordert werden, daß das Fahrzeug eine vorbestimmte Grenzgeschwindigkeit überschreitet. Das Umschalten vom Anfahrbetrieb in den Normalbetrieb erfolgt daher vom Fahrer völlig unbemerkt, so daß keine unerwarteten Lenkbewegungen stattfinden können. Zusätzlich zu der parameterabhängigen Umschaltung kann im Cockpit des Fahrzeuges ein entsprechender Schalter vom Fahrer zum manuellen Aktivieren und Deaktivieren des Anfahrbetriebes betätigt werden.

Entsprechend einer vorteilhaften Ausführungsform des erfindungsgemäßen Fahrzeuges kann der Haltelenkwinkel sowohl bei einem Halt aus Vorwärtsfahrt als auch bei einem Halt aus Rückwärtsfahrt bestimmt werden und im darauf folgenden Anfahrbetrieb sowohl bei Vorwärtsfahrt als auch bei Rückwärtsfahrt eingehalten werden. Durch diese Maßnahme wird gewährleistet, daß das Fahrzeug einen gekrümmten Weg (z.B. ein sackgassenartiger Parkplatz), in den es vorwärts oder rückwärts einfahren konnte, auch wieder problemlos in umgekehrter Richtung verlassen kann.

Bei einer Weiterbildung des erfindungsgemäßen Fahrzeuges wird der Haltelenkwinkel lediglich dem Betrage nach erfaßt, so daß Lenkeinschläge nach links und nach rechts jeweils nur bis zum Betrag des Haltelenkwinkels möglich sind. Diese Maßnahme hat z.B. zur Folge, daß ein bei Geradeausfahrt anhaltendes Fahrzeug sich im darauf folgenden Anfahrbetrieb wie ein Fahrzeug ohne gelenkte Hinterräder verhält.

Weitere wichtige Merkmale und Vorteile des erfindungsgemäßen Fahrzeuges ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert. Es zeigen, jeweils schematisch,
- Fig. 1: eine schematische Draufsicht auf ein erfindungsgemäß ausgebildetes Fahrzeug zur Erläuterung der Betriebsweise der Fahrzeuglenkung bei einem Halt mit starkem Lenkungseinschlag und
- Fig. 2: eine Draufsicht wie in Fig. 1, jedoch bei einem Halt mit kleinem Lenkungseinschlag.

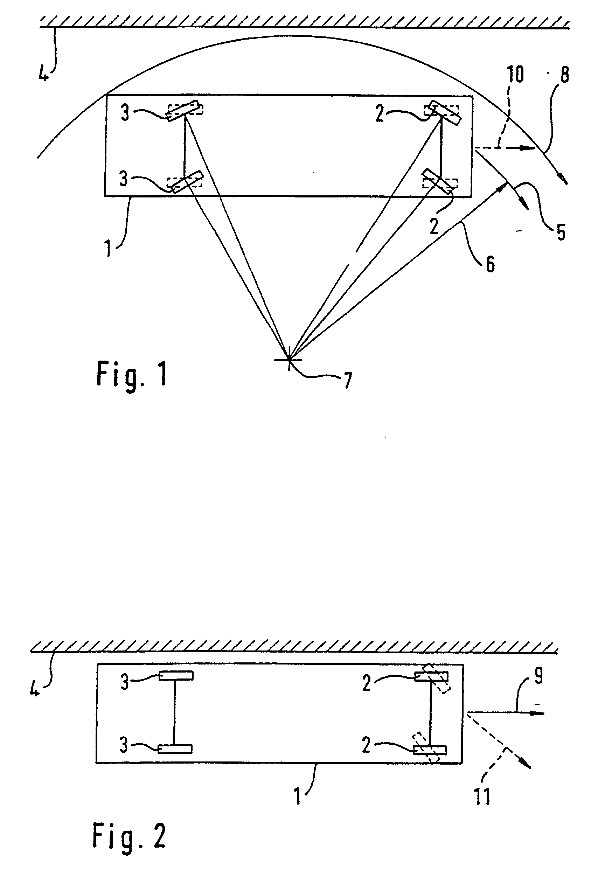

Entsprechend den Fig. 1 und 2 weist ein erfindungsgemäßes Fahrzeug 1, das beispielsweise ein Omnibus sein kann, lenkbare Vorderräder 2 auf, die von einem Fahrer des Fahrzeuges 1 willkürlich lenkbetätigt werden. Das Fahrzeug 1 weist außerdem lenkbare Hinterräder 3 auf, die von einer nicht dargestellten Hinterradzusatzlenkung in Abhängigkeit der Vorderräder 2 lenkbetätigt werden. Zur Vereinfachung der Darstellung ist das im Ausführungsbeispiel beschriebene Fahrzeug jeweils nur mit einer, die lenkbaren Vorderräder aufweisenden Vorderachse und mit einer, die lenkbaren Hinterräder aufweisenden Hinterachse ausgestattet. Die Erfindung ist jedoch ebenso auf Fahrzeuge anwendbar, die mehr als zwei Achsen und insbesondere mehr als zwei Achsen mit lenkbaren Rädern aufweisen.

In den Fig. 1 und 2 befindet sich das Fahrzeug 1 im wesentlichen parallel zu seiner Längsrichtung neben einem Hindernis 4, das beispielsweise eine Bordsteinkante, eine Hauswand oder eine Laderampe sein kann.

Die Hinterradzusatzlenkung weist einen Normalbetrieb auf, in dem vorzugsweise eine proportionale Abhängigkeit zwischen den Lenkwinkeln der Vorderräder 2 und dem von der Steuerung bzw. Regelung der Hinterradzusatzlenkung eingestellten Lenkwinkel der Hinterräder 3 besteht. Dabei kann diese proportionale Abhängigkeit über den gesamten Lenkwinkelbereich der Vorderräder bestehen, d.h. die Hinterräder 3 erreichen erst dann einen maximalen Lenkwinkel, beispielsweise in Form eines Lenkwinkelanschlages, wenn auch die Vorderräder ihren maximalen Lenkwinkel einnehmen. Ebenso ist eine Ausgestaltung möglich, bei der die Hinterräder ihren maximalen Lenkwinkel schon erreichen, wenn die Vorderräder ihren maximalen Lenkwinkel noch nicht erreicht haben. In diesem Fall weisen die Hinterräder bei noch größeren Lenkwinkeln der Vorderräder einen konstanten Lenkwinkel, nämlich ihren maximalen Lenkwinkel, auf.

Die Abhängigkeit der Lenkbetätigung der Hinterräder von der Lenkbetätigung der Vorderräder kann auch an weitere Parameter gekoppelt sein. Beispielsweise ist die Proportionalität zwischen den Hinterräderlenkwinkeln und den Vorderräderlenkwinkeln von der Fahrzeuggeschwindigkeit abhängig. Ausgehend von einer Fahrzeuggeschwindigkeit mit dem Wert Null bis zu einer ersten Grenzgeschwindigkeit wird dabei die Einhaltung eines konstanten Proportionalitätsfaktors für die Abhängigkeit der Hinterradlenkwinkel von den Vorderradlenkwinkeln bevorzugt. Oberhalb dieser ersten Grenzgeschwindigkeit bis zu einer zweiten Grenzgeschwindigkeit weist die Abhängigkeit der Hinterradlenkwinkel von den Vorderradlenkwinkeln einen, z.B. linear bis auf den Wert Null abnehmenden Proportionalitätsfaktor auf. Ab dieser zweiten Grenzgeschwindigkeit weist der Proportionalitätsfaktor konstant den Wert Null auf. Das bedeutet, daß ab der zweiten Grenzgeschwindigkeit das Fahrzeug das Fahrverhalten eines Fahrzeuges ohne Hinterradlenkung aufweist.

Gemäß Fig. 1 führt das Fahrzeug 1 eine Kurvenfahrt 5 durch eine relativ enge Kurve mit dementsprechend kleinem Radius 6 bezüglich eines Kurvenzentrums 7 durch. Dabei weisen die Vorderräder 2 und die Hinterräder 3 entsprechend große Lenkwinkel auf. Wenn das Fahrzeug 1 im Verlaufe einer derartigen Kurvenfahrt 5 an dem Hindernis 4 vorbeifährt, ergibt sich für den dargestellten Zustand, in dem das Fahrzeug 1 im wesentlichen parallel zum geradlinigen Hindernis 4 ausgerichtet ist, zwangsläufig ein relativ großer Abstand zwischen dem Fahrzeug 1 und dem Hindernis 4. Die Hinterradzusatzlenkung arbeitet dabei so, daß im Verlaufe einer solchen Kurvenfahrt 5 das Heck des Fahrzeuges 1 sicher nicht die mit 8 bezeichnete Außenbahn des Fahrzeugbugs radial nach außen überschreiten wird. Demnach kann davon ausgegangen werden, daß bei ordnungsgemäß durchfahrener Kurvenbahn 5 keine Kollisionsgefahr zwischen dem Fahrzeugheck und dem Hindernis 4 besteht. Aufgrund dieser Erkenntnis geht die Erfindung davon aus, daß ein Hinteradlenkwinkel, der beim Durchfahren einer Kuvenbahn 5 eingestellt ist, auch bei Unterbrechung der Kurvenfahrt 5, z.B. durch einen Fahrzeughalt, unkritisch ist.

Wenn das Fahrzeug 1 entsprechend Fig. 2 etwa tangential bzw. parallel zum Hindernis eine Geradeausfahrt 9 durchführt, weisen die Vorderräder 2 und die Hinterräder 3 entsprechend kleine Lenkwinkel auf. Dabei kann das Fahrzeug 1 relativ geringe Abstände zum Hindernis 4 einnehmen. Falls das Fahrzeug 1 dann abrupt seine Fahrbahn ändert, beispielsweise um sich vom Hindernis 4 zu entfernen, weisen die Vorderräder 2 den mit unterbrochenen Linien dargestellten Lenkeinschlag auf. Wenn in diesem Fall die Hinterräder 3 entsprechend der im Normalbetrieb herrschenden Abhängigkeit betätigt würden, würde dies unweigerlich zu einer Kollision des Fahrzeughecks mit dem Hindernis 4 führen. Wenn es sich bei dem Hindernis 4 um eine Bordsteinkante handelt, kann diese dabei von den Hinterrädern 3 überfahren werden.

Das erfindungsgemäße Fahrzeug 1 arbeitet wie folgt:

Wenn das Fahrzeug 1 einen Halt durchführt, schaltet die Hinterradzusatzlenkung vom Normalbetrieb in einen Anfahrbetrieb um. Dabei wird der beim Halt von den Hinterrädern 3 eingenommene Lenkwinkel gespeichert und für die Dauer der nächsten Anfahrphase des Fahrzeuges 1 als Maximaleinschlag definiert. Mit anderen Worten, bei dem auf den Halt folgenden Anfahrvorgang können an den Hinterrädern 3 keine größeren Lenkwinkel eingestellt werden, als derjenige Lenkwinkel, den sie beim Halt eingenommen haben. Der Lenkwinkel, den die Hinterräder 3 beim Halt des Fahrzeuges 1 einnehmen, wird im folgenden auch als "Haltelenkwinkel" bezeichnet.

Durch die erfindungsgemäße Ausgestaltung der Hinterradzusatzlenkung wird für den Anfahrbetrieb ein neuer Maximaleinschlag für die Hinterräder 3 definiert. Im übrigen bleibt die Abhängigkeit, insbesondere die Proportionalität zwischen den Hinterradlenkwinkeln und den Vorderradlenkwinkeln unbeeinflußt. Das heißt, die Kopplung der Hinterräderlenkung an die Lenkbetätigung der Vorderräder 2 entspricht im Anfahrbetrieb bis zum Erreichen des Haltelenkwinkels dem Normalbetrieb. Erst bei Vorderräderlenkwinkeln, die im Normalbetrieb Hinterräderlenkwinkel erzeugen würden, die größer als der aktuelle Haltelenkwinkel sind, bleiben die Hinterräder 3 konstant beim Haltelenkwinkel, so daß diesem eine Anschlagfunktion zugeordnet ist.

Wenn das Fahrzeug 1 wie in Fig. 1 einen Halt während einer Kurvenfahrt 5 durchführt, bedeutet dies, daß der während dem Halt von den Hinterrädern 3 eingenommene relativ große Lenkwinkel auch beim darauffolgenden Anfahren von den Hinterrädern 3 wieder eingenommen werden kann. Dies ist unkritisch, da man davon ausgehen kann, daß das Fahrzeug bei ordnungsgemäßer Lenkung ohne Kollision seines Bugs am Hindernis 4 vorbeigelenkt worden ist. Ist dies der Fall, dann gibt der Lenkwinkel der Hinterräder 3 für das Fahrzeugheck einen Kurs vor, der ebenfalls sicher eine Kollision mit dem Hindernis 4 vermeidet. Wenn der Fahrer nach dem Halt einen größeren Lenkwinkel an den Vorderrädern 2 einstellt, würde dies beim Normalbetrieb dazu führen, daß sich auch an den Hinterrädern 3 ein größerer Lenkwinkel einstellt. Bei Fortsetzung der Fahrt würde sich dann zwar der Fahrzeugbug schneller von dem Hindernis 4. entfernen, jedoch würde sich das Fahrzeugheck zunächst stärker an das Hindernis 4 annähern, so daß die Gefahr einer Kollision besteht. Erfindungsgemäß wird jedoch im Anfahrbetrieb der beim Halt eingestellte Hinterradlenkwinkel (Haltelenkwinkel) als maximaler Lenkeinschlag für die Hinterrädern 3 definiert, so daß das Fahrzeugheck im wesentlichen die unkritische Außenbahn 8 durchfährt, die sich durch die Kurvenfahrt 5 beim Halt ergibt. Es ist durchaus möglich, daß das Fahrzeug geringfügig ausschwenkt, wenn bei gleichbleibendem Hinterradlenkwinkel der Vorderradlenkwinkel vergrößert wird. Jedoch ist dieser Effekt vom Fahrer durch einen maßvollen Lenkeinschlag ohne weiteres beherrschbar. Es ist klar, daß kleinere Winkel als der Haltelenkwinkel nach wie vor eingestellt werden können, so daß das Fahrzeug 1 beispielsweise auch in einer Geradeausfahrt 10, die durch einen gestrichelten Pfeil und gestrichelte Vorder- und Hinterräder symbolisiert ist, aus dem Halt anfahren kann. Wenn an den Vorderrädern 2 ein größerer Lenkwinkel eingestellt wird, kann sich das Fahrzeug rascher von dem Hindernis 4 entfernen als dies im Normalbetrieb möglich wäre.

Wenn das Fahrzeug 1 wie in dem in Fig. 2 dargestellten Fall vor seinem Halt parallel zum Hindernis 4 fährt, weisen die Hinterräder 3 einen Lenkwinkel mit dem Wert Null auf. Erfindungsgemäß wird dann dieser Lenkwinkel als Haltelenkwinkel ermittelt, der dann den maximal möglichen Lenkeinschlag der Hinterräder 3 definiert. Dies bedeutet in diesem Fall, daß die Hinterräder 3 während der Anfahrphase gar keine Lenkbewegung durchführen können. Das Fahrzeug 1 verhält sich daher wie ein Fahrzeug ohne Hinterräderlenkung. Ein Ausschwenken des Fahrzeughecks und somit Gefahren für das Fahrzeug oder für Verkehrsteilnehmer werden somit reduziert. Der Fahrer kann dann das Fahrzeug wie ein herkömmliches Fahrzeug mit ungelenkten Hinterrädern 3 mit maßvollem Lenkeinschlag an den Vorderrädern 2 entsprechend einer Kurvenfahrt 11, die durch einen Pfeil und mit unterbrochenen Linien dargestellten Vorderrädern symbolisiert ist, vom Hindernis 4 entfernen.

Die erfindungsgemäße Fahrzeuglenkung erkennt einen Halt des Fahrzeuges dadurch, daß eine vorgegebene Fahrzeuggrenzgeschwindigkeit unterschritten wird. Zusätzlich kann bei einem Omnibus ein Halt auch an das Öffnen einer Türe gekoppelt sein. Beispielsweise kann auch vorgesehen sein, unterhalb einer bestimmten Fahrzeuggeschwindigkeit den bis zum endgültigen Stillstand an den Hinterrädern 3 auftretenden kleinsten Lenkwinkel als Haltelenkwinkel zu definieren. Hierbei wird der Fall berücksichtigt, daß das Fahrzeug mit einer Geschwindigkeit kleiner als die vorgenannte Grenzgeschwindigkeit mit einem starken Lenkeinschlag in eine Haltestelle einbiegt, vor dem endgültigen Halt jedoch mit kleiner werdenden Lenkwinkeln eine starke Annäherung, beispielsweise an eine Laderampe oder an eine Bordsteinkante, erreicht.

Es ist klar, daß die Fahrzeuggrenzgeschwindigkeit, unterhalb derer ein Halt erkannt wird, auch größer als der Wert Null sein kann. Hierbei werden die Fälle berücksichtigt, bei denen das Fahrzeug durch enge Straßen oder beim Rangieren mit geringem Abstand an einem Hindernis 4 vorbei fahren soll. Es wird davon ausgegangen, daß eine relativ dichte Annäherung mit dem Fahrzeug 1 an ein Hindernis 4 sowie ein abrupter Richtungswechsel nur bei relativ kleinen Geschwindigkeiten durchgeführt werden, die unterhalb der für das Umschalten auf den Anfahrbetrieb vorgesehenen Fahrzeuggrenzgeschwindigkeit liegen.

Das Umschalten vom Anfahrbetrieb in den Normalbetrieb erfolgt z.B. dann, wenn das Fahrzeug eine bestimmte Grenzgeschwindigkeit überschreitet und wenn außerdem an den Hinterrädern 3 erstmals wieder ein Lenkwinkel eingestellt wird, der kleiner als der Haltelenkwinkel ist. Auf diese Weise erfolgt der Übergang zwischen dem Anfahrbetrieb und dem Normalbetrieb so, daß sich keine abrupte Änderung des Lenkverhaltens einstellt und der Übergang somit vom Fahrer nicht bemerkt wird.

## Patentansprüche

1. Nicht spurgebundenes Fahrzeug mit willkürlich lenkbaren Vorderrädern (2) und selbsttätig arbeitender bzw. auf selbsttätigen Betrieb umschaltbarer Hinterradzusatzlenkung, die den Lenkwinkel der Hinterräder (3) in Abhängigkeit vom Lenkwinkel der Vorderräder (2) sowie von weiteren Parametern, wie insbesondere Fahrzeuggeschwindigkeit und zurückgelegte Wegstrecke, steuert bzw. regelt, wobei die Hinterradzusatzlenkung parameterabhängig zwischen einem Anfahrbetrieb und einem Normalbetrieb umschaltet,
**dadurch gekennzeichnet,**
**daß** der Lenkwinkel der Hinterräder (3) beim Anfahrbetrieb derart gesteuert bzw. geregelt wird, daß die Hinterräder (3) nicht über einen beim letzten Halt des Fahrzeuges (1) eingenommenen Lenkwinkel, den sogenamten Haltelenkwinkel hinaus verstellt werden.

2. Fahrzeug nach Anspruch 1,
**dadurch gekennzeichnet,**
**daß** die Hinterradzusatzlenkung einen Halt des Fahrzeuges (1) durch das Unterschreiten einer vorbestimmten Fahrzeuggrenzgeschwindigkeit erkennt.

3. Fahrzeug nach einem der Ansprüche 1 und 2,
**dadurch gekennzeichnet, daß** die Hinterradzusatzlenkung vom Anfahrbetrieb in den Normalbetrieb umschaltet, sobald die Hinterräder (3) einen Lenkwinkel einnehmen, der kleiner als der Haltelenkwinkel ist.

4. Fahrzeug nach Anspruch 3,
**dadurch gekennzeichnet,**
**daß** die Hinterradzusatzlenkung bei Vorwärtsfahrt vom Anfahrbetrieb in den Normalbetrieb umschaltet, sobald das Fahrzeug (1) eine Wegstrecke zurückgelegt hat, die etwa dem Abstand zwischen den Vorderrädern (2) und den Hinterrädern (3) entspricht, und die Hinterräder (3) einen Lenkwinkel einnehmen, der kleiner als der Haltelenkwinkel ist.

5. Fahrzeug nach Anspruch 3,
**dadurch gekennzeichnet,**
**daß** die Hinterradzusatzlenkung vom Anfahrbetrieb in den Normalbetrieb umschaltet, sobald das Fahrzeug (1) eine vorbestimmte Fahrzeuggrenzgeschwindigkeit erreicht und die Hinterräder (3) einen Lenkwinkel einnehmen, der kleiner als der Haltelenkwinkel ist.

6. Fahrzeug nach einem der Ansprüche 1 bis 5,
**dadurch gekennzeichnet,**
**daß** der Lenkwinkel der Hinterräder (3) bis zu einem maximalen Lenkwinkel (Hinterradgrenzlenkwinkel) proportional vom Lenkwinkel der Vorderräder (2) abhängt und bei denjenigen Lenkwinkeln der Vorderräder (2), die über einen mit dem Hinterradgrenzlenkwinkel korrelierenden Lenkwinkel hinausgehen, gleichbleibend ist, wobei während des Anfahrbetriebes der Haltelenkwinkel als Hinterradgrenzlenkwinkel dient.

7. Fahrzeug nach Anspruch 6,
**dadurch gekennzeichnet,**
**daß** die Proportionalität zwischen den Lenkwinkeln der Hinterräder (3) und den Lenkwinkeln der Vorderräder (2) von der Fahrzeuggeschwindigkeit abhängt, derart, daß bei Fahrzeuggeschwindigkeiten unterhalb eines ersten Geschwindigkeitsgrenzwertes der Proportionalitätsfaktor konstant ist, zwischen dem ersten Geschwindigkeitsgrenzwert und einem höheren zweiten Geschwindigkeitsgrenzwert der Proportionalitätsfaktor bis auf den Wert Null abnimmt, so daß die Hinterräder (3) auf Geradeausfahrt eingestellt sind, und oberhalb des zweiten Geschwindigkeitsgrenzwertes der Proportionalitätsfaktor bei dem Wert Null bleibt.

8. Fahrzeug nach einem der Ansprüche 1 bis 7,
**dadurch gekennzeichnet,**
**daß** der Haltelenkwinkel sowohl bei einem Halt aus Vorwärtsfahrt als auch bei einem Halt aus Rückwärtsfahrt bestimmt wird und im darauf folgenden Anfahrbetrieb sowohl bei Vorwärtsfahrt als auch bei Rückwärtsfahrt eingehalten wird.

9. Fahrzeug nach einem der Ansprüche 1 bis 8
**dadurch gekennzeichnet,**
**daß** der Haltelenkwinkel betragsmäßig, d.h. unabhängig von der Lenkrichtung, eingehalten wird, so daß die Hinterräder (3) sowohl bei einem Linkseinschlag als auch bei einem Rechtseinschlag beim Anfahrbetrieb nicht über den Betrag des Haltelenkwinkels hinaus verstellt werden.

## Claims

1. Non-track bound vehicle with arbitrarily steerable front wheels (2) and automatically operating or automatic operation of switchable rear-wheel supplementary steering, which controls or regulates the steering angle of the rear wheels (3) depending on the steering angle of the front wheels (3) as well as other parameters, such as vehicle speed and distance travelled in particular, the rear wheel supplementary steering switching between start-up operation and normal operation on the basis of parameters,
**characterised in that**
the steering angle of the rear wheels (3) during start-up operation is controlled or regulated so that the rear wheels (3) are not displaced beyond a steering angle assumed the last time the vehicle (1) was stopped, being the so-called stopping steering angle.

2. Vehicle as claimed in claim 1,
**characterised in that**
the rear wheel supplementary steering detects a halt of the vehicle (1) when the vehicle speed falls below a predetermined threshold.

3. Vehicle as claimed in one of claims 1 and 2,
**characterised in that**
the rear wheel supplementary steering switches from start-up operation to normal operation immediately the rear wheels (3) assume a steering angle which is smaller than the stopping steering angle.

4. Vehicle as claimed in claim 3,
**characterised in that**
during forward travel, the rear wheel supplementary steering switches from start-up operation to normal operation immediately the vehicle (1) has travelled a distance substantially corresponding to the distance between the front wheels (2) and the rear wheels (3) and the rear wheels (3) assume a steering angle which is smaller than the stopping steering angle.

5. Vehicle as claimed in claim 3,
**characterised in that**
the rear wheel supplementary steering switches from start-up operation to normal operation immediately the vehicle (1) has reached a predetermined vehicle threshold speed and the rear wheels (3) assume a steering angle which is smaller than the stopping steering angle.

6. Vehicle as claimed in one of claims 1 to 5,
**characterised in that**
the steering angle of the rear wheels (3) up to a maximum steering angle (rear wheel threshold steering angle) is proportionately dependent on the steering angle of the front wheels (2) and is constant at steering angles of the front wheels (2) over and above a steering angle correlating to the rear wheel threshold steering angle, the stopping steering angle being used as the rear wheel threshold steering angle during normal operation.

7. Vehicle as claimed in claim 6,
**characterised in that**
the proportionality between the steering angles of the rear wheels (3) and the steering angles of the front wheels (2) depends on the vehicle speed in such a way that at vehicle speeds below a first speed threshold value the proportionality factor is constant, between the first speed threshold value and a second, higher speed threshold value the proportionality factor decreases to a zero value so that the rear wheels (3) are adjusted to travel in a straight line and the proportionality factor remains at a zero value above the second speed threshold value.

8. Vehicle as claimed ion one of claims 1 to 7,
**characterised in that**
the stopping steering angle is determined both when stopping during forward travel and when stopping during reverse travel and is maintained during subsequent start-up operation during both forward travel and reverse travel.

9. Vehicle as claimed in one of claims 1 to 8,
**characterised in that**
the stopping steering angle is maintained in terms of value, i.e. irrespective of the steering direction, so that the rear wheels (3) are not displaced by more than the amount of the. stopping steering angle both during a left-lock and during a right-lock during start-up operation.

## Revendications

1. Véhicule non assujetti à une voie, comportant des roues avant (2) dirigeables à volonté et une direction additionnelle des roues arrière à fonctionnement automatique ou susceptible d'être commutée vers un fonctionnement automatique, laquelle commande ou règle l'angle de direction des roues arrière (3) en fonction de l'angle de direction des roues avant (2) ainsi qu'en fonction d'autres paramètres, comme en particulier de la vitesse du véhicule et de la distance parcourue, la direction additionnelle de roues arrière commutant en fonction de paramètres entre un fonctionnement de démarrage et un fonctionnement normal,
**caractérisé en ce que** l'angle de direction des roues arrière (3) est commandé ou réglé en fonctionnement de démarrage de telle sorte que les roues arrière (3) ne peuvent pas être déplacées au-delà d'un angle de direction occupé lors du dernier arrêt du véhicule (1) - angle dit de direction à l'arrêt.

2. Véhicule selon la revendication 1, **caractérisé en ce que** la direction additionnelle de roues arrière reconnaît un arrêt du véhicule (1) lorsque la vitesse tombe en deçà d'une vitesse limite prédéterminée du véhicule.

3. Véhicule selon l'une des revendications 1 et 2, **caractérisé en ce que** la direction additionnelle de roues arrière commute depuis le fonctionnement de démarrage jusque dans le fonctionnement normal dès que les roues arrière (3) occupent un angle de direction qui est inférieur à l'angle de direction à l'arrêt.

4. Véhicule selon la revendication 3, **caractérisé en ce que** la direction additionnelle de roues arrière commute, en marche avant, depuis le fonctionnement de démarrage jusque dans le fonctionnement normal dès que le véhicule (1) a parcouru une distance qui correspond approximativement à l'écartement entre les roues avant (2) et les roues arrière (3) et que les roues arrière occupent un angle de direction qui est inférieur à l'angle de direction à l'arrêt.

5. Véhicule selon la revendication 3, **caractérisé en ce que** la direction additionnelle de roues arrière commute depuis le fonctionnement de démarrage jusque dans le fonctionnement normal dès que le véhicule (1) a atteint une vitesse limite prédéterminée et que les roues arrière (3) occupent un angle de direction qui est inférieur à l'angle de direction à l'arrêt.

6. Véhicule selon l'une quelconque des revendications 1 à 5, **caractérisé en ce que**, jusqu'à un angle de direction maximum (angle de direction limite de roue arrière), l'angle de direction des roues arrière (3) dépend proportionnellement de l'angle de direction des roues avant (2), et **en ce que**, pour des angles de direction des roues avant (2) qui dépassent un angle de direction corrélé avec l'angle de direction limite des roues arrière, il demeure constant, l'angle de direction à l'arrêt servant d'angle de direction des roues arrière pendant le fonctionnement au démarrage.

7. Véhicule selon la revendication 6, **caractérisé en ce que** la proportionnalité entre les angles de direction des roues arrière (3) et les angles de direction des roues avant (2) dépend de la vitesse du véhicule de telle sorte que pour des vitesses de véhicule inférieures à une première valeur limite de vitesse, le facteur de proportionnalité est constant, qu'entre la première valeur limite de vitesse et une deuxième valeur limite de vitesse plus élevée, le facteur de proportionnalité diminue jusqu'à la valeur zéro de sorte que les roues arrière (3) sont réglées sur la marche en ligne droite, et qu'en dessus de la deuxième valeur limite de vitesse, le facteur de proportionnalité reste à la valeur zéro.

8. Véhicule selon l'une quelconque des revendications 1 à 7, **caractérisé en ce que** l'angle de direction à l'arrêt est déterminé tant lors d'un arrêt en marche avant que lors d'un arrêt en marche arrière et **en ce que** lors du fonctionnement en démarrage qui suit, il est maintenu tant en marche avant qu'en marche arrière.

9. Véhicule selon l'une quelconque des revendications 1 à 8, **caractérisé en ce que** l'angle de direction à l'arrêt est maintenu du point de vue de sa valeur, c'est-à-dire indépendamment de la direction prise, de sorte que les roues arrière (3) ne sont pas déplacées au-delà de la valeur de l'angle de direction à l'arrêt tant lors d'un braquage à gauche que lors d'un braquage à droite pendant le fonctionnement en démarrage.
